# EUROPEAN PATENT SPECIFICATION

(11) **EP 0 487 337 B1**
(45) Date of publication and mention of the grant of the patent: **22.05.1996**
(21) Application number: 91310719.9
(22) Date of filing: 20.11.1991
(51) Int. Cl.: C08L 23/02

(54) **Polyolefin resin composition and molded article thereof**
Polyolefin-Harzzusammensetzung und daraus geformter Gegenstand
Composition de résine polyoléfinique et article moulé à partir de celle-ci

(30) Priority: 21.11.1990 JP 320053/90
(43) Date of publication of application: 27.05.1992
(73) Proprietor: POLYPLASTICS CO. LTD., Chuo-Ku Osaka-shi Osaka 541 (JP)
(72) Inventor: Tagima, Yoshihisa, Shimizu-shi, Shizuoka (JP); Miyawaki, Keiichi, Fuji-shi, Shizuoka (JP)
(74) Representative: W.P. THOMPSON & CO.

(56) References cited:
- EP-A- 0 202 430
- EP-A- 0 271 327
- EP-A- 0 426 482
- FR-A- 2 337 747
- US-A- 4 728 698

## Description

The present invention relates to an olefin resin composition which comprises an olefin resin, a melt-processable polyester forming an anisotropic molten phase (hereinafter referred to as "liquid-crystal polyester") and a filler and which has excellent mechanical properties, particularly an enhanced heat deformation temperature and exhibits less deformation and a high dimensional accuracy, and molded articles formed therefrom.

Olefin resins represented by polyethylene, polypropylene and copolymers thereof are very inexpensive and are therefore used in various fields in large quantities. However, they are generally flexible and are limited in mechanical properties. Particularly, they have such a low heat deformation temperature that they are liable to shrink and deform in molding. Accordingly, their physical properties are not such that they can be used in the production of components of electronic or electrical appliances, automobile parts or working parts of other general machines as a so-called engineering plastic.

Although the blending of glass fibres or other reinforcement or filler with olefin resins has been known as a means for offsetting the above faults, olefin resins improved by this means are still not suitable for use as engineering plastics. That is, although olefin resins are improved by the above means in their mechanical properties and heat deformation temperature (heat resistance) to some extent, the improvement is still insufficient. Further a fiber-reinforced olefin resin exhibits an enhanced anisotropy in molding shrinkage to give a deformed molded article, so that it is difficult to produce a molded article having precise dimensions and shape from such a reinforced resin. Accordingly, in spite of its inexpensiveness the use of fiber-reinforced olefin resins in the production of large-sized articles or articles necessitating precise dimensions and shape is still very limited.

Further, there have been many attempts to improve the characteristics of olefin resins by the addition of other thermoplastic resins. Since, however, olefin resins are generally problematic in their compatibility with other thermoplastic resins, particularly with so-called engineering resins having excellent mechanical properties and heat resistance. When such a thermoplastic resin is added to an olefin resin it is dispersed in the olefin resin as a bulk or particle, so that the compositions resulting from the above attempts have not provided sufficient improvement in physical properties and particularly, some of the compositions cause surface peeling which render them unfit for practical use.

In view of the above problems, it is an object of the present invention to provide an olefin resin composition which has a desirable dispersion form and is remarkably improved in mechanical properties (in which hitherto available polyolefin resins are poor, particularly in the resistance to heat and molding shrinkage (dimensional stability)) and which is satisfactorily usable as an engineering plastic in various fields.

It has now been found that a composition prepared by blending an olefin resin (A) with a specific liquid-crystal polyester resin (B) and a filler (C) is improved in physical properties,
particularly in its resistance to heat and deformation and in its dimensional accuracy by virtue of the synergistic action of the components (B) and (C).

The present invention provides a resin composition prepared by melt-kneading a resin component comprising (A) 99 to 50 parts by weight of an olefin resin and (B) 1 to 50 parts by weight of a melt-processable polyester resin forming an anisotropic molten phase together with, for each 100 parts by weight of said resin component 1 to 300 parts by weight of (C) a filler. In this composition, the components (A) to (C) are dispersed in each other in a desirable form which will be described below, so that the composition is improved in mechanical properties, particularly in heat deformation temperature and reduced in deformation due to molding shrinkage to permit the provision of a molded article excellent in dimensional accuracy.

The composition of the present invention will now be described in more detail.

The olefin resin (A) to be used in the present invention as a main component may be a homopolymer or copolymer comprising ethylene, propylene or other olefin monomer as a main component. Particular examples include polymers of ethylene and α-olefins, such as high-density polyethylene, medium-density polyethylene, low-density polyethylene, polypropylene, polybutene-1, poly-3-methylbutene-1 and poly-4-methylpentene-1; copolymers comprising at least two monomers selected from among ethylene and α-olefins; and copolymers comprising one or more monomers selected from among ethylene and α-olefins and a comonomer selected from among vinyl esters such as vinyl acetate; acrylic or methacrylic acid derivatives (such as methyl acrylate, methyl methacrylate and dimethylaminoethylacrylamide); glycidyl esters of α,β-unsaturated acids (such as glycidyl acrylate and glycidyl methacrylate) and dienes such as butadiene and isoprene.

The liquid-crystal polyester (B) to be used in the present invention is a polyester which is melt-processable in itself and has a property that the molecular chains thereof are arranged regularly in parallel in a molten state. The molecule of such a liquid-crystal polyester is generally slender and flat, exhibits a relatively high stiffness along the major axis thereof and contains chain-lengthening bonds which are present either coaxially or in parallel.

The presence of an anisotropic molten phase can be ascertained by a conventional test with polarized light using crossed nicols. More precisely, a molten sample put on a Leitz hot stage is observed in a nitrogen atmosphere by the use of a Leitz polarization microscope (40 x magnification). When the liquid-crystal polyester to be used in the present invention is tested according to this method between the crossed nicols, polarized light should be transmitted through the nicols even when the polyester is in a static molten state. That is, the polyester should exhibit optical anisotropy.

Although the liquid-crystal polyester (B) to be used in the present invention is unfit for solution molding or processing because it is substantially insoluble in a general solvent, it can be easily molded or processed by a conventional melt-processing method.

The liquid-crystal polyester to be used in the present invention is preferably an aromatic polyester or an aromatic polyesteramide though it may be even a polyester partially containing aromatic polyester and aromatic polyesteramide units in the same molecular chain provided that it exhibits liquid crystallinity.

Particularly, liquid-crystal aromatic polyesters and liquid-crystal aromatic polyesteramides each containing at least one compound selected from the group consisting of aromatic hydroxy carboxylic acids, aromatic hydroxylamines and aromatic diamines as the constituent monomer are preferred.

Still more preferable examples thereof include:
1) polyesters each mainly constituted of one or more members selected from among aromatic hydroxy carboxylic acid: and derivatives thereof,
2) polyesters each mainly constituted of
   a) one or more members selected from among aromatic hydroxy carboxylic acids and derivatives thereof,
   b) one or more members selected from among aromatic dicarboxylic acids, alicyclic, dicarboxylic acids and derivatives thereof, and
   c) one or more members selected from among aromatic diols, alicyclic diols, aliphatic diols and derivatives thereof,
3) polyesteramides each mainly constituted of
   a) one or more members selected from among aromatic hydroxy carboxylic acids and derivatives thereof,
   b) one or more members selected from among aromatic hydroxy amines, aromatic diamines and derivatives thereof,
      and
   c) one or more members selected from among aromatic dicarboxylic acids, alicyclic dicarboxylic acids and derivatives thereof, and
4) polyesteramides each mainly constituted of
   a) one or more members selected from among aromatic hydroxy carboxylic acids and derivatives thereof,
   b) one or more members selected from among aromatic hydroxy amines, aromatic diamines and derivatives thereof,
   c) one or more members selected from among aromatic dicarboxylic acids, alicyclic dicarboxylic acids and derivatives thereof, and
   d) one or more members selected from among aromatic diols, alicyclic diols, aliphatic diols and derivatives thereof.
Further, a part or the whole of the hydroxyl groups of the hydroxyl compound described above may be replaced by thiol (-SH) groups.

Preferred particular examples of the compound constituting the liquid-crystal polyester to be used in the present invention include p-substituted benzene derivatives such as p-hydroxybenzoic acid, terephthalic acid, hydroquinone, p-aminophenol and p-phenylenediamine and ring-substituted derivatives thereof (wherein the substituent is selected from among chlorine, bromine, methyl, phenyl and 1-phenylethyl); m-substituted benzene derivatives such as isophthalic acid and resorcinol; naphthalene derivatives such as 2,6-naphthalenedicarboxylic acid, 2,6-dihydroxynaphthalene, 1,4-dihydroxynaphthalene and 6-hydroxy-2-naphthoic acid; biphenyl compounds such as 4,4′-diphenyldicarboxylic acid and 4,4′-dihydroxybiphenyl; and bisphenol compounds represented by the following general formulas (I), (II) and (III): 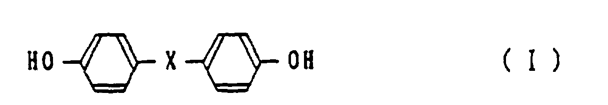 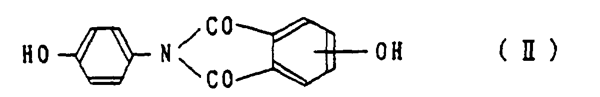 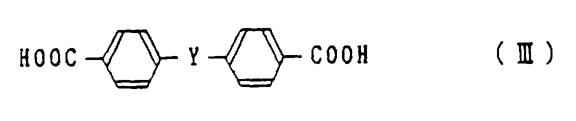 wherein
X represents a group selected from among alkylene groups having 1 to 4 carbon atoms, alkylidene groups and -O-, -SO-, -SO₂-, -S- and -CO- groups
and
Y represents a group selected from among those represented by the formulas:

-(CH₂)ₙ-

(wherein n is 1 to 4) and -O(CH₂)ₙO- (wherein n is 1 to 4).

The liquid-crystal polyester to be used in the present invention may partially contain polyalkylene terephthalate not forming any anisotropic molten phase in addition to the constituent segments described above in the same molecular chain. The alkylene group of the polyalkylene terephthalate has 2 to 4 carbon atoms.

Among the liquid-crystal polyesters described above, polyesters each containing one or more members selected from among p-substituted benzene derivatives, naphthalene derivatives and biphenyl compounds as essential components are still preferable. Further, among the p-substituted benzene derivatives listed above, p-hydroxybenzoic acid, methylhydroquinone and 1-phenylethylhydroquinone are particularly preferable.

The liquid-crystal polyester (B) to be favorably used in the present invention is a polyester which exhibits liquid crystallinity at 350°C or below and has a viscosity of 50000 P or below, preferably 20000 to 50 P, still preferably 10000 to 100 P as determined at 310°C and a shear rate of 1200 sec⁻¹. A liquid-crystal polyester having too high a melt viscosity or too low a melt viscosity can difficultly attain a desirable dispersion form, so that it is less effectively improved in the mechanical properties and resistance to heat and deformation and is unfavorable from the standpoint of processability in molding.

The polyester resin composition of the present invention may auxiliarily contain another thermoplastic resin in a small amount, so far as the object of the present invention is not hindered.

Examples of the thermoplastic resin to be auxiliarily used include non-liquid-crystal aromatic polyesters prepared from either aromatic dicarboxylic acid and diol or hydroxy carboxylic acid, such as polyethylene terephthalate and polybutylene terephthalate; polyacetals (homopolymer and copolymer), polystyrene, polyvinyl chloride, polyamide, polycarbonate, ABS, polyarylene oxide and polyarylene sulfide. These thermoplastic resins may be also used as a mixture of two or more of them.

According to the present invention, a fibrous, powdery or flaky filler is used as the component (C) depending upon the object.

Examples of the fibrous filler include inorganic fibrous materials such as glass fiber, asbestos fiber, carbon fiber, silica fiber, silica/alumina fiber, zirconia fiber, boron nitride fiber, silicon nitride fiber, boron fiber and potassium titanate fiber, and fibrous materials of metal such as stainless steel, aluminum, titanium, copper or brass. High-melting organic fibrous materials which do not melt in the preparation of the composition, for example, polyamide, fluororesin and acrylic resin may also be used.

Examples of the powdery filler include carbon black, silicates such as silica, quartz powder, glass bead, glass powder, calcium silicate, aluminum silicate, kaolin, talc, clay, diatomaceous earth and wollastonite, metal oxides such as iron oxide, titanium oxide and alumina; carbonates such as calcium carbonate and magnesium carbonate; sulfates such as calcium sulfate and barium sulfate; silicon carbide, silicon nitride, boron nitride and various powdered metals.

Examples of the flaky filler include mica, glass flake and various metal foils.

These fillers may be treated with a conventional surface treatment, for example, a silane, epoxy, titanate or polyamide treatment prior to their use.

A particularly representative example of the filler is a glass fiber preferably having a mean diameter of 5 to 30 µm and a mean length of 50 µm or above, more preferably 100 µm or above. The simultaneous use of such a glass fiber with other powdery or flaky inorganic filler is also particularly preferable.

According to the present invention, the weight ratio of the polyolefin resin (A) to the liquid-crystal polyester (B) is between 99 : 1 and 50 : 50, preferably between 98 : 2 and 60 : 40.

Further, the filler (C) is used in an amount of 1 to 300 parts by weight, preferably 5 to 200 parts by weight per 100 parts by weight of the above resin component.

The composition of the present invention may further contain an antioxidant, heat stabilizer, lubricant, nucleating agent, ultraviolet absorber, colorant, mold release agent and/or other conventional additives depending upon the object.

These additives may be added to the resin composition either simultaneously with the melt kneading which will be described below or separately therefrom.

Although the composition of the present invention can be prepared by various known processes, the components (A), (B) and (C) must be blended together, melted by heating and kneaded for at least 30 seconds. In a particular embodiment, the components (A), (B) and (C) are preliminarily mixed together with a mixing machine such as a tumbler or Henschel mixer, fed into a single- or twin-screw extruder and melt-kneaded in the extruder to give a pelletized composition. The treatment is conducted at a temperature higher than the melting point of the resin component e.g., by 5 to 100°C, preferably by 10 to 60°C. If the treatment is conducted at too high a temperature, decomposition or abnormal reactions will occur. The melt treatment time may be 30 seconds to 15 minutes, preferably 1 to 10 minutes.

A composition comprising a polyolefin resin and another resin generally has a so-called sea-island structure wherein the added resin is present in a particulate state, even when the other resin is relatively well compatible with a polyolefin resin. In contrast, the melt-kneaded composition of the present invention has a dispersion form wherein at least a part, generally most of the liquid-crystal polyester (B) interlinks the filler (C) and penetrates into the component (A) in a branched or network state to form an intertwined structure. Particularly, it has been ascertained microscopically or electron-microscopically that the composition prepared under preferable conditions according to the present invention has a structure characterized in that the component (B) envelops nearly all of the filler (C), that most of the component (B) forms a continuous phase in which the component (C) is present in an interlinked state and that the continuous phase is dispersed in the component (A) in a network state. Such a structure can be easily attained particularly when a filler exhibiting a surface tension of 40 dyn/cm (0.04 Nm⁻¹) or above at the melt-kneading temperature is used as the component (C). This structure is effective in improving the mechanical characteristics and heat deformation temperature. Particularly when a fibrous filler is used, the structure effectively serves to depress the anisotropic arrangement of the filler to improve the dimensional accuracy and deformation resistance. Although most of the fillers described above each exhibit a surface tension satisfying the above requirement, even a filler insufficient in this respect can attain the effects of the present invention by enhancing the surface tension of the filler to a suitable extent by suitable surface treatment.

The present invention will be further described and illustrated by the following examples.

### Examples 1 to 4 and Comparative Examples 1 to 3

A polypropylene (PP) resin (a product of Mitsui Petrochemical Industries, Ltd., 400F) as the component (A), a liquid-crystal polyester resin (B-1) (which will be described below) as the component (B) and a glass fiber as the component (C) were blended together at a ratio specified in Table 1 and melt-kneaded in a twin-screw extruder having a diameter of 30 mm at a temperature of 310°C to give pellets. The pellets were molded into a tensile test piece with an injection molding machine (mfd. by Nissei Jushi Kogyo K.K.) at a barrel temperature of 310°C and a mold temperature of 60°C. This test piece was examined for the dispersion of the components, shrinkage factor, heat deformation temperature (HDT) and tensile strength and elongation. The results are given in Table 1.

The dispersion of the components was determined by a method which comprises cutting the above test piece into a test piece (about 10 x 10 x 3 mm), treating it in a xylene solution at 130°C under reflux for 12 hours to dissolve the polypropylene resin as the matrix in the xylene solution and observing the resulting test piece with the naked eye or an electron microscope. According to this test method, the test piece retains its shape when the liquid-crystal polyester and the glass fiber are dispersed so as to form a network structure, while the test piece loses its shape when they are dispersed in a particulate state. Further, the dispersion was quantitatively evaluated by passing the residue remaining after the extraction with xylene through a sieve having an opening diameter of 4 mm and calculating the weight ratio of the components (B) and (C) dispersed in a network state from the weight of the cake remaining on the sieve. That is, when the weight of the cake is near the total weight of the liquid-crystal polyester and glass fiber used, it is estimated that an interpenetrating network structure is formed.

The shrinkage factor was determined by accurately measuring the dimension in a predetermined direction of the test piece and is expressed by the difference (%) from the corresponding mold dimension.

The heat deformation temperature (HDT) was determined according to ASTM D-648 (18.6 kg/cm), while the tensile strength and elongation were determined according to ASTM D-638.

### Examples 5 to 7

The same procedure as that of the Example 2 was repeated except that the amount of the glass fiber used was varied. The results are given in Table 2.

### Example 8 and Comparative Examples 4 to 6

The same procedure as that of each of the Example 2 and Comparative Examples 1 to 3 was repeated except that the component (A) was replaced by polyethylene (PE) (a product of Mitsui Petrochemical Industries, Ltd., "Hizex").

The results are given in Table 3.

### Examples 9 and 10 and Comparative Examples 7 and 8

The same procedure as that of each of the Example 2 and Comparative Example 2 was repeated except that the component (B) was replaced by B-2 or B-3 (see the notes which will be given below). The results are given in Table 4.

### Example 11 and Comparative Example 9

The same procedure as that of each of the Example 2 and Comparative Example 3 was repeated except that the glass fiber used as the component (C) was replaced by talc. The results are given in Table 5.

(notes) The structures and viscosities of the liquid-crystal polyesters used in the above Examples as the component (B) are as follows: 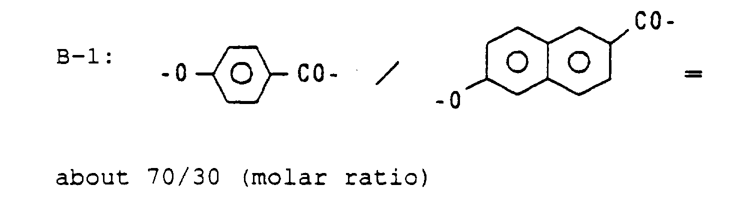
viscosity: about 600 P (as determined at 310°C and a shear rate of 1200 sec⁻¹) 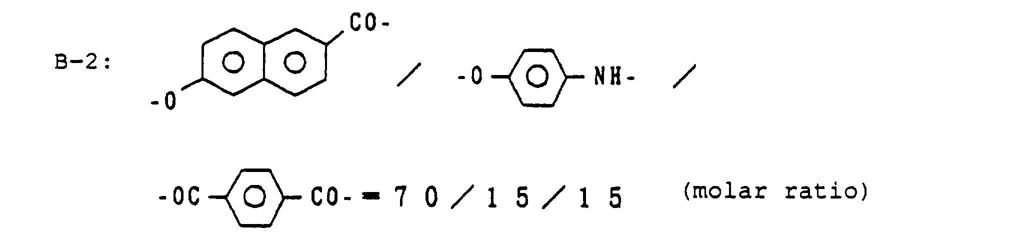
viscosity: about 5000 P (as determined at 310°C and a shear rate of 1200 sec⁻¹) 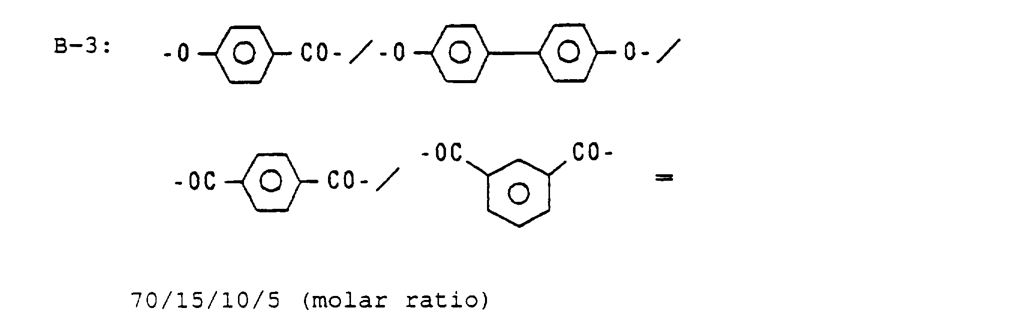
viscosity: about 1500 P (as determined at 310°C and a shear rate of 1200 sec⁻¹)

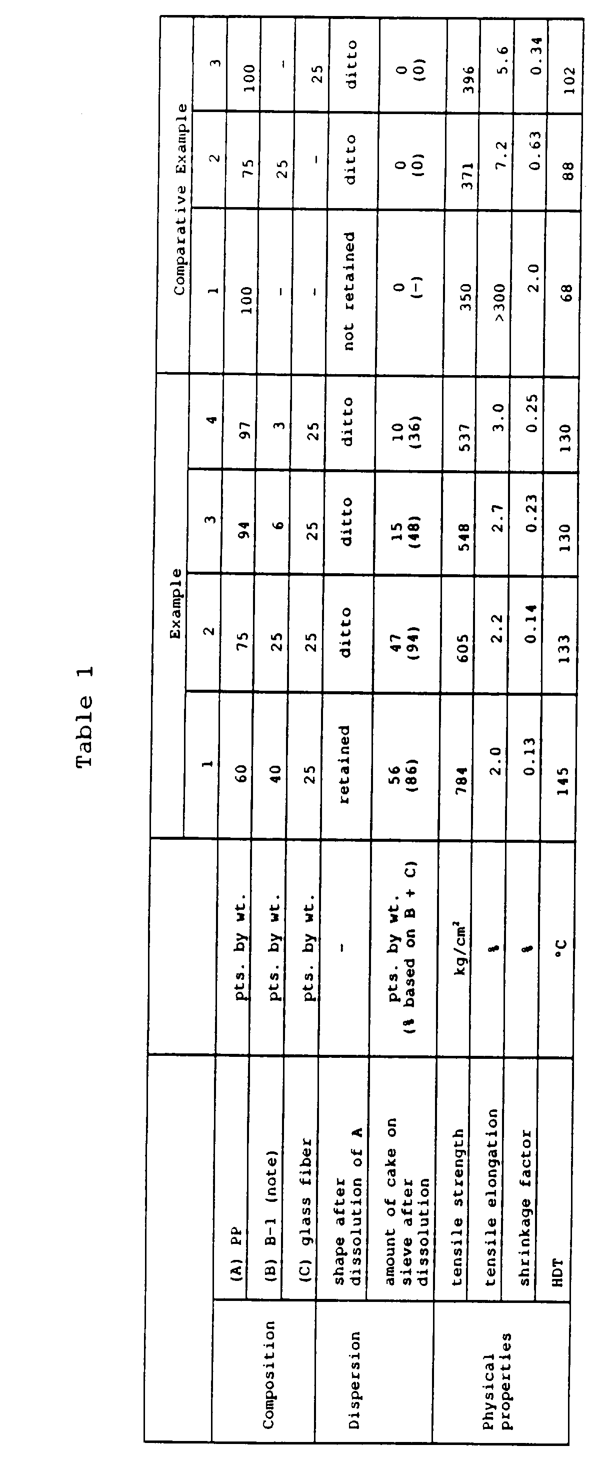

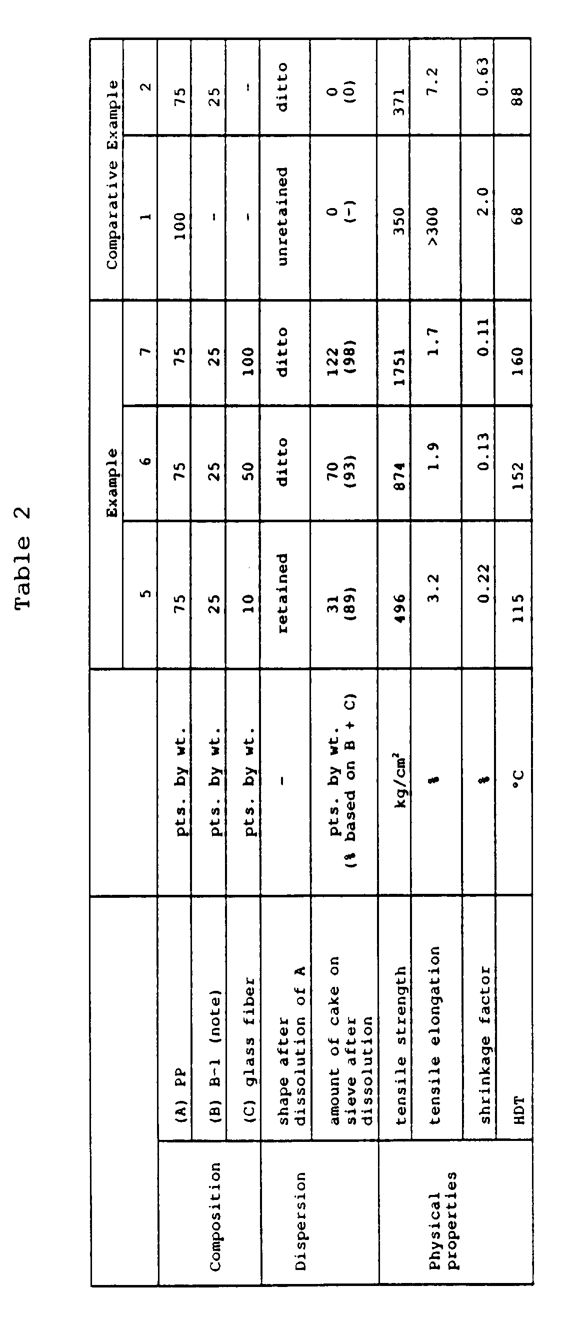

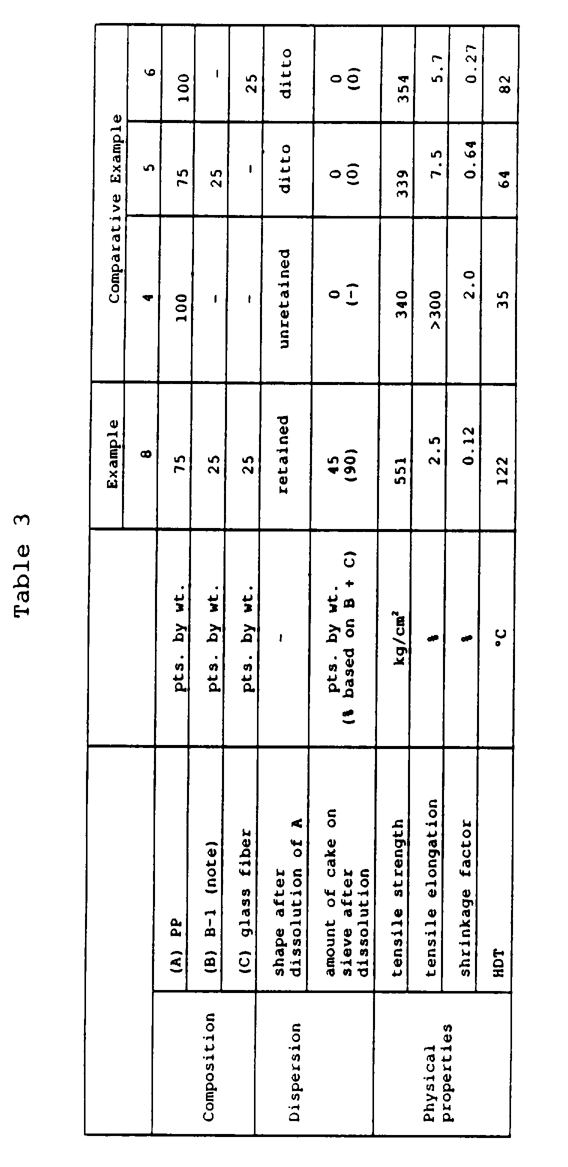

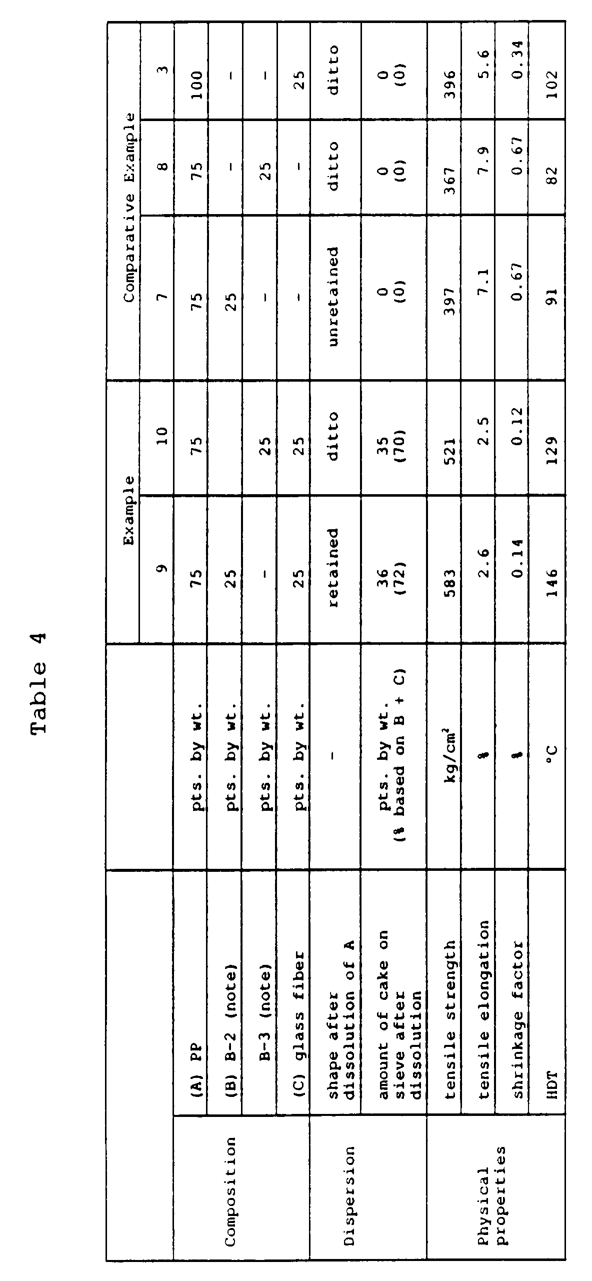

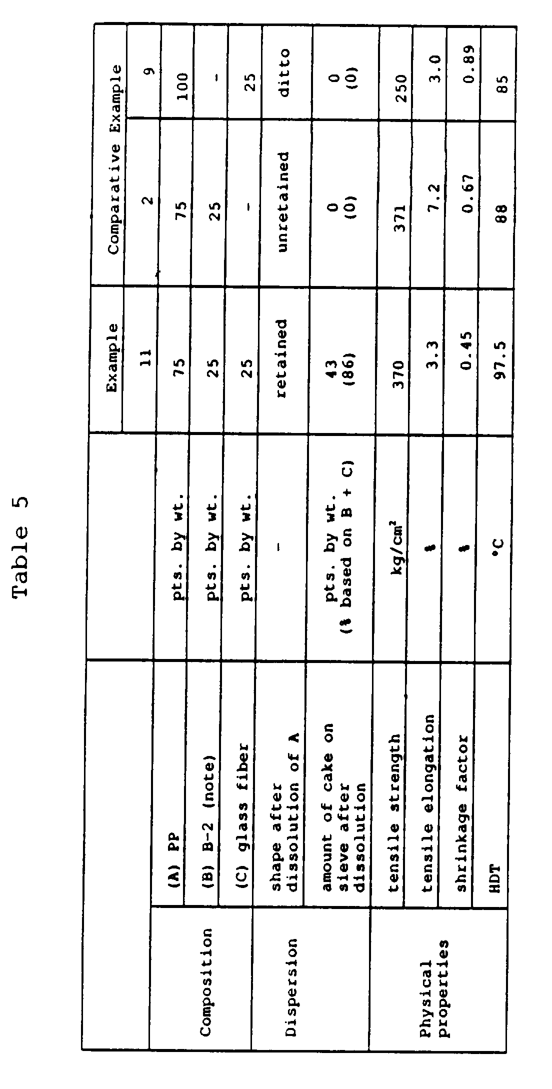

As apparent from the foregoing description and examples, the polyolefin resin composition of the present invention and a molded article thereof are characterized in that the liquid-crystal polyester and filler added thereto are dispersed in a specific network state. By this characteristic, a molded article made from the composition of the present invention exhibits excellent mechanical properties and a heat deformation temperature enhanced enough to be fit for high-temperature use. Further, the composition can be molded with a reduced shrinkage and an enhanced dimensional accuracy to permit the production of a large-sized or precision molded article. Furthermore, the molded article made from the composition of the present invention is also excellent in surface appearance. As described above, the composition of the present invention permits the production of a molded article which has not been producible from any polyolefin resin composition of the prior art, so that the application thereof to many fields is expected.

## Claims

1. A resin composition prepared by melt-kneading a resin component comprising (A) 99 to 50 parts by weight of an olefin resin and (B) 1 to 50 parts by weight of a melt-processable polyester resin forming an anisotropic molten phase, together with for each 100 parts by weight of said resin component, 1 to 300 parts by weight of (C) a filler.

2. A resin composition as set forth in claim 1, wherein said filler (C) is a glass fiber having a mean fiber length of 50 µm or above.

3. A resin composition as set forth in claim 1 or 2, wherein said melt-processable polyester resin forming an anisotropic molten phase is a polyester having a melt viscosity of 20000 to 50 P (as determined at 310°C and a shear rate of 1200 sec⁻¹) and forming an anisotropic molten phase at 350°C or below.

4. A molded resin article made from a resin composition as set forth in any of claims 1 to 3, wherein the melt-processable polyester resin (B) forming an anisotropic molten phase interlinks or envelops the filler (C) and is dispersed in the component (A) in a branched or network state.

## Patentansprüche

1. Harzzusammensetzung, hergestellt durch Schmelzkneten einer Harzkomponente, die (A) 99 bis 50 Gewichtsteile eines Olefinharzes und (B) 1 bis 50 Gewichtsteile eines schmelzverarbeitbaren Polyesterharzes, das eine anisotrope geschmolzene Phase bildet, umfaßt, zusammen mit 1 bis 300 Gewichtsteilen (C) eines Füllstoffes für 100 Gewichtsteile der Harzkomponente.

2. Harzzusammensetzung nach Anspruch 1, dadurch gekennzeichnet, daß der Füllstoff (C) eine Glasfaser mit einer mittleren Faserlänge von 50 µm oder darüber ist.

3. Harzzusammensetzung nach Anspruch 1 oder 2, dadurch gekennzeichnet, daß das eine anisotrope geschmolzene Phase bildende schmelzverarbeitbare Polyesterharz ein Polyester mit einer Schmelzviskosität von 20000 bis 50 P (bestimmt bei 310 °C und einer Shergeschwindigkeit von 1200 sec⁻¹) ist, und eine anisotrope geschmolzene Phase bei 350 °C oder darunter ausbildet.

4. Harzformkörper aus einer in einem der Ansprüche 1 bis 3 definierten Harzzusammensetzung, dadurch gekennzeichnet, daß das schmelzverarbeitbare Polyesterharz (B), das eine anisotrope geschmolzene Phase bildet, den Füllstoff (C) verkettet oder umgibt und in der Komponente (A) in einem verzweigten oder vernetzten Zustand dispergiert ist.

## Revendications

1. Une composition de résine préparée en malaxant à l'état fondu un constituant résineux comprenant (A) 99 à 50 parties en poids d'une résine polyoléfinique et (B) 1 à 50 parties en poids d'une résine polyester transformable par fusion formant une phase fondue anisotrope, avec, pour 100 parties en poids dudit constituant résineux, 1 à 300 parties en poids de (C) une charge.

2. Une composition de résine telle que spécifiée dans la revendication 1, dans laquelle ladite charge (C) est une fibre de verre ayant une longueur moyenne de fibres de 50 µm ou plus.

3. Une composition de résine telle que spécifiée dans la revendication 1 ou 2, dans laquelle ladite résine polyester transformable par fusion formant une phase fondue anisotrope est un polyester ayant une viscosité à l'état fondu de 20 000 à 50 P (telle que déterminée à 310°C et à une vitesse de cisaillement de 1200 s⁻¹) et formant une phase fondue anisotrope à 350°C ou moins.

4. Un article moulé en résine fabriqué à partir d'une composition de résine telle que spécifiée dans l'une quelconque des revendications 1 à 3, dans lequel la résine polyester transformable par fusion (B) formant une phase fondue anisotrope enchaîne ou enveloppe la charge (C) et est dispersée dans le composant (A) en un état ramifié ou réticulaire.
